# FASCICULE DE BREVET EUROPEEN

(11) **EP 1 694 478 B1**
(45) Date de publication et mention de la délivrance du brevet: **05.03.2008**
(21) Numéro de dépôt: 04805602.2
(22) Date de dépôt: 01.12.2004
(51) Int. Cl.: B27K 3/15, C08L 97/02

(54) **PROCEDE DE TRAITEMENT DE BOIS PAR POLYMERISATION IN SITU SOUS RAYONNEMENT ELECTROMAGNETIQUE**
IN-SITU-POLYMERISATION UNTER ELEKTROMAGNETISCHER STRAHLUNG UMFASSENDES HOLZBEHANDLUNGSVERFAHREN
WOOD-TREATMENT METHOD COMPRISING IN SITU POLYMERISATION UNDER ELECTROMAGNETIC RADIATION

(30) Priorité: 10.12.2003 FR 0314470; 20.07.2004 FR 0408034
(43) Date de publication de la demande: 30.08.2006
(73) Titulaire: Henri Selmer Paris, 75011 Paris (FR)
(72) Inventeur: GIBIAT, Vincent, F-31400 Toulouse (FR); SELMER, Jérôme, F-75116 Paris (FR); HALARY, Jean-Louis, F-75011 Paris (FR)
(74) Mandataire: Doressamy, Clarisse
(86) Numéro de dépôt international: PCT/FR2004/003080
(87) Numéro de publication internationale: WO 2005/065901

(56) Documents cités:
- WO-A-94/11167
- DE-A- 10 061 059
- FR-A- 1 507 184
- FR-A- 2 069 406
- FR-A- 2 119 159
- US-A- 3 243 140
- US-A- 4 143 188

## Description

La présente invention concerne un procédé de fabrication d'instruments à vent en bois par imprégnation et polymérisation *in situ* de monomères sous rayonnement électromagnétique.

Depuis toujours, les essences de bois dures telles que le chêne, l'ébène, le buis et le palissandre, sont très recherchées par les artisans et industriels pour leurs excellentes propriétés mécaniques, notamment leur grande résistance au choc, leur capacité à supporter des charges importantes, leur faible déformation au cours du temps ou encore leur excellentes propriétés acoustiques. Or, ces essences dures ont généralement une croissance lente et il est de ce fait difficile de satisfaire la demande des industries et artisans transformateurs de bois.

Certaines essences sont même devenues si rares qu'il s'est avéré nécessaire de les protéger et de limiter leur abattage. Ainsi, l'ébène, un bois exotique utilisé depuis des siècles pour la fabrication de meubles, d'objets décoratifs et d'instruments de musique est aujourd'hui menacé d'interdiction à l'abattage et à l'exportation et risque de ne plus être disponible sur le marché dans un avenir assez proche.

Il se pose par conséquent le problème particulier du remplacement de cette essence précieuse par d'autres essences non protégées, et plus généralement le problème de l'amélioration des propriétés mécaniques de bois tendres et/ou poreux à croissance rapide afin de pouvoir les substituer aux essences dures à croissance lente relativement plus chères.

La Demanderesse, dans le cadre de ses recherches visant à trouver une solution pour remplacer l'ébène dans la fabrication d'instruments à vent, a découvert qu'il était possible, grâce à un procédé relativement simple de polymérisation *in situ* de monomères polycondensables ou polymérisables par oxydation, de traiter des essences de bois, en particulier celles ayant une structure à porosité ouverte, de manière à améliorer considérablement leurs propriétés mécaniques et acoustiques et d'élargir ainsi de manière spectaculaire les possibilités d'application de ces bois.

On connaît déjà de la demande internationale WO 01/53050 un procédé de traitement du bois par polymérisation et réticulation *in situ* de monomères vinyliques. Ce procédé comprend la polymérisation radicalaire, amorcée par au moins trois amorceurs différents, d'un mélange de monomères vinyliques monofonctionnels en présence d'agents de réticulation divinyliques et d'au moins une huile ou une cire, cette dernière jouant le rôle de modérateur de la polymérisation et d'agent hydrofuge du produit fini. Un tel procédé de traitement du bois, en particulier lorsqu'il est appliqué à la fabrication d'instruments de musique, présente toutefois un inconvénient important, à savoir la présence de monomères résiduels malodorants et présentant un certain risque pour la santé. Ce problème des monomères résiduels a été résolu dans la présente invention grâce au choix d'une méthode de polymérisation différente de la polymérisation radicalaire, à savoir la polycondensation ou la polymérisation oxydative. Dans un mélange de monomères polycondensables ou polymérisables par oxydation, chaque monomère est en principe capable, sans être activé, de réagir avec l'ensemble ou une fraction importante des comonomères présents, ce qui n'est pas le cas pour une polymérisation radicalaire où les monomères ne peuvent réagir et être incorporés dans la chaîne macromoléculaire que lorsqu'ils viennent en contact avec le centre actif (radicalaire ou ionique) d'une chaîne polymère en croissance. Or, ces centres actifs sont relativement peu nombreux par rapport au nombre de monomères et généralement instables de sorte qu'à la fin de la polymérisation, la proportion de monomères n'ayant pas réagi reste importante. Dans le cas d'une polycondensation ou d'une polymérisation oxydative, au contraire, la probabilité pour un monomère de réagir avec un ou plusieurs autres monomères est très grande et la fraction de monomères n'ayant pas réagi devient rapidement négligeable.

La présente invention a donc pour objet un procédé de fabrication d'instruments à vent en bois par polymérisation *in situ,* comprenant :
- une première étape d'imprégnation d'une pièce en bois avec des monomères organiques choisis parmi
   (A) les huiles siccatives et/ou
   (B) au moins un premier réactif comportant au moins deux fonctions glycidyle et au moins un deuxième réactif comportant au moins deux fonctions -NH d'amine primaire ou d'amine secondaire, la fonctionnalité moyenne de l'ensemble des premier et deuxième réactifs étant strictement supérieure à 2,
- une deuxième étape d'exposition du bois ainsi imprégné à un rayonnement électromagnétique d'une longueur d'onde (λ) comprise entre 1 et 10⁻³ mètres pendant une durée totale comprise entre 5 secondes et 40 secondes et avec une puissance comprise entre 300 et 1000 Watts.

Le procédé de la présente invention peut être mis en oeuvre avec des bois ayant une porosité ouverte, c'est-à-dire des bois possédant un système étendu de pores qui communiquent les uns avec les autres, mais également avec des bois peu poreux tels que l'ébène ou des bois comportant une majorité de pores, ou alvéoles, fermés. Dans ces deux derniers types de bois, appelés ci-après « bois à porosité fermée », la communication entre les pores ouverts, relativement plus rares, est plus difficile et le taux d'imprégnation, à savoir l'augmentation du poids par imprégnation rapportée au poids initial, sera plus faible.

Plus précisément, on entend dans la présente invention par « bois à porosité ouverte » un bois capable d'absorber, à 5 °C, dans des conditions normales de pression et pour une durée d'immersion de 30 jours, au moins 15 % en poids de 1-méthoxy-2-propanol (solvant de référence).

De manière analogue, les « bois à porosité fermée » absorbent dans ces mêmes conditions moins de 15 % en poids de 1-méthoxy-2-propanol. Ces deux types de bois possèdent toutefois un volume poreux accessible sans lequel aucune imprégnation n'est possible. Ce volume poreux accessible est simplement plus important pour les bois à porosité ouverte que pour les bois à porosité fermée.

On peut citer à titre d'exemples de bois à porosité ouverte le tilleul, l'épicéa, le monpani, le peuplier et le wengué *(Milletia laurentii*), également appelé « palissandre du Congo ». Ce dernier est un bois exotique relativement dur, proche de l'ébène, qui se caractérise par une croissance rapide et est de ce fait un candidat intéressant pour le remplacement de celui-ci. Son principal inconvénient réside dans sa grande porosité, défaut auquel la présente invention se propose de remédier.

Les bois à porosité fermée sont choisis par exemple parmi les ébènes et les palissandres, de préférence parmi les ébènes.

La première étape d'imprégnation du procédé de traitement selon l'invention se fait de préférence sous une pression supérieure à la pression atmosphérique, et en particulier à une pression comprise entre 0,4 et 1 MPa (4 et 10 bars). Cette pression élevée est particulièrement utile pour augmenter la vitesse d'imprégnation lorsque la viscosité du liquide d'imprégnation est élevée, soit en raison d'une concentration élevée en monomères soit en raison d'une faible température d'imprégnation.

La deuxième étape de chauffage de la pièce de bois imprégnée par exposition à un rayonnement électromagnétique est essentielle pour le procédé selon l'invention. En effet, le chauffage par rayonnement électromagnétique, notamment par micro-ondes, permet un chauffage rapide jusqu'au coeur de la pièce, autrement dit sur la totalité de la profondeur d'imprégnation, et garantit ainsi une réaction la plus complète possible des monomères.

L'énergie thermique nécessaire à une polymérisation complète dépend bien entendu de la taille de la pièce. Pour la polymérisation des huiles siccatives (A), l'énergie thermique à fournir est à peu près proportionnelle au volume de la pièce. La polycondensation des amines et époxydes (B) par contre est une réaction exothermique et il suffit généralement de chauffer la pièce de bois à une température et pendant une durée suffisantes pour permettre à la réaction exothermique de polycondensation entre le premier et deuxième réactifs de s'auto-entretenir grâce à la chaleur réactionnelle libérée.

La longueur d'onde du rayonnement électromagnétique est de préférence comprise entre 10⁻¹ et 10⁻² mètres et la durée d'exposition au rayonnement électromagnétique est comprise entre 15 et 30 secondes.

Certains bois résistent moins bien que d'autres à un chauffage puissant prolongé et risquent de subir des dommages. Il peut alors être intéressant de décomposer l'étape d'exposition au rayonnement électromagnétique en plusieurs périodes de plus faible durée, n'excédant généralement pas 10 à 15 secondes. Ces périodes sont généralement séparées par des périodes sans chauffage, d'une durée de quelques minutes à plusieurs dizaines de minutes, permettant au bois de refroidir au moins partiellement.

L'exposition au rayonnement électromagnétique peut être mise en oeuvre dans un four à micro-ondes usuel ayant une puissance restituée au moins égale à 300 Watts, de préférence comprise entre 400 et 1000 Watts.

Dans un premier mode de réalisation préféré du procédé de l'invention, le bois à traiter est un bois à porosité ouverte et les monomères sont choisis parmi les monomères de type (B) aboutissant, après polycondensation, à la formation de résines époxy-amine. Ces monomères (B) doivent être utilisés en solution dans un solvant organique volatil qui sera normalement éliminé après imprégnation. Un tel procédé comprend
(a) l'immersion d'une pièce en bois à porosité ouverte dans une solution contenant, dans un solvant organique volatil, au moins un premier réactif comportant au moins deux fonctions glycidyle et au moins un deuxième réactif comportant au moins deux fonctions -NH d'amine primaire ou d'amine secondaire, la fonctionnalité moyenne de l'ensemble des premier et deuxième réactifs étant strictement supérieure à 2, pendant une durée suffisante pour permettre le remplissage par la solution d'au moins 60 % du volume poreux accessible du bois, et à une température suffisamment basse pour empêcher la polymérisation prématurée des monomères pendant cette étape d'imprégnation (a),
(b) le retrait de la pièce imprégnée par la solution organique et l'égouttage et/ou l'essuyage de la pièce en bois,
(c) l'exposition du bois ainsi imprégné à un rayonnement électromagnétique d'une longueur d'onde (λ) comprise entre 1 et 10⁻³ mètres pendant une durée totale comprise entre 5 secondes et 40 secondes, et éventuellement,
(d) le séchage de la pièce, de préférence sous pression réduite, pendant une durée suffisante pour permettre l'évaporation du solvant organique.

Ce mode de réalisation préféré du procédé de traitement de bois poreux de la présente invention améliore considérablement les propriétés mécaniques des bois traités. Ceux-ci présentent un module d'Young significativement plus important que le bois non traité et une fragilité réduite et résistent parfaitement à la fissuration au cours du temps.

Par ailleurs, le procédé de l'invention présente l'avantage de ne pas modifier les dimensions de la pièce de bois. La Demanderesse a en effet constaté que les dimensions des pièces traitées restent inchangées au moins jusqu'à un rapport pondéral polymère/bois égal à 0,5. Cette grande stabilité dimensionnelle permet ainsi de traiter des pièces aux cotes définitives.

Il est également possible d'usiner les pièces traitées selon le procédé de la présente invention. Ainsi, dans un mode de réalisation préféré de l'invention, à savoir la fabrication d'instruments à vent, on peut traiter des ébauches ayant la forme d'un cylindre creux, et réaliser les perforations ultérieurement.

Les bois traités présentent en outre une très faible tendance à absorber l'humidité de l'air ou l'eau venant au contact de la pièce traitée.

Dans la première étape de ce mode de réalisation, la pièce de bois à traiter est imbibée par immersion dans une solution contenant les réactifs polymérisables dans un solvant organique relativement volatil. Ce solvant a de préférence un point de fusion inférieur ou égal à - 30 °C et un point d'ébullition inférieur ou égal à 250 °C, et plus particulièrement inférieur ou égal à 150 °C. La volatilité du solvant organique est en effet importante pour permettre un séchage facile de la pièce une fois la réaction de polycondensation achevée. Le solvant organique volatil est de préférence choisi parmi les composés hydrocarbonés ayant un squelette en C₁₋₆ et comportant au moins un groupe polaire choisi(s) parmi les fonctions alcool secondaire, éther et ester.

Un autre groupe de solvants préféré pour la mise en oeuvre de la présente invention est formé par les huiles végétales, dont certaines sont déjà utilisées pour le traitement du bois. L'huile végétale utilisée doit avoir une viscosité faible à basse température pour pouvoir pénétrer avec une vitesse raisonnable à l'intérieur du système poreux du bois à des températures qui ne déclenchent pas prématurément la polymérisation spontanée du système.

L'homme du métier veillera bien entendu à choisir le ou les solvants organiques de manière à ce qu'ils n'interfèrent pas avec la réaction de polycondensation des réactifs polymérisables, et il convient de veiller en particulier à ne pas utiliser des composés à hydrogène labile tels que des alcools primaires, phénols et thiols susceptibles de réagir avec les fonctions glycidyle du premier réactif.

On peut citer à titre d'exemples de solvants organiques préférés l'éther diméthylique de l'éthylèneglycol, l'éther diméthylique du diéthylèneglycol, le 1,3-diacétate de glycérol, la triacétine et le 1-méthoxy-2-propanol mentionné ci-dessus, ce dernier étant particulièrement préféré.

On peut citer à titre d'exemples d'huiles végétales, l'huile de lin, l'huile de ricin, l'huile de tournesol, l'huile de soja, l'huile de noix, l'huile de pépin de raisin. On préfère en particulier l'huile de lin. En effet, l'huile de lin fait partie des huiles siccatives (= monomères (A)). Elle jouera par conséquent dans l'étape d'imprégnation (a) le rôle de solvant pour les monomères (B) et polymérisera pendant l'étape (c) en même temps que les monomères (B).

L'imprégnation du bois doit se faire pendant une durée suffisante pour permettre le remplissage par la solution d'au moins 60 % du volume poreux accessible du bois. Le volume poreux accessible total d'un bois donné peut être déterminé facilement en laissant l'imprégnation se poursuivre jusqu'à ce que le poids d'un échantillon n'augmente plus avec le temps d'imprégnation. Le volume poreux accessible de l'échantillon est égal au quotient de la différence de poids entre l'échantillon imprégné et non imprégné sur la masse volumique de la solution d'imprégnation. Ce volume poreux accessible peut bien entendu être rapporté à une unité volumique du bois à traiter.

La réaction de polycondensation utilisée dans ce mode de réalisation du procédé de la présente invention est une réaction entre un premier réactif comportant au moins deux groupes glycidyliques (époxyde) et un deuxième réactif comportant au moins deux fonctions -NH d'amine primaire ou d'amine secondaire, capables de réagir avec les groupes glycidyliques du premier réactif. Il est bien connu dans le domaine de la polycondensation que, lorsqu'on utilise uniquement des réactifs difonctionnels, c'est-à-dire des réactifs comportant exactement deux fonctions réactives (époxydes ou NH), le système macromoléculaire obtenu sera composé uniquement de chaînes linéaires mais ne formera pas un réseau tridimensionnel réticulé tel que visé dans la présente invention. Il est par conséquent indispensable d'utiliser une certaine fraction de réactifs comportant plus de deux fonctions réactives (époxyde ou -NH). La proportion de molécules polyfonctionnelles est généralement exprimée grâce à la fonctionnalité moyenne du système réactif, c'est-à-dire le nombre moyen de fonctions réactives par molécule, qui doit être strictement supérieure à 2 pour l'obtention d'un système tridimensionnel réticulé. Il convient de noter à ce propos que dans le système de polycondensation utilisé dans la présente invention, la fonctionnalité d'une amine primaire ou secondaire n'est pas égale au nombre de fonctions amine mais au nombre de fonctions -NH. Une monoamine primaire comportant une seule fonction -NH₂ peut réagir deux fois avec une fonction époxy et a de ce fait une fonctionnalité égale à 2. De manière analogue, une diamine primaire a une fonctionnalité de 4.

Un paramètre permettant d'exprimer le degré de réticulation du système polymère de résines époxy-amine est la densité de réticulation, à savoir le nombre de moles de points de réticulation par unité de masse du réseau. La densité de réticulation théorique, c'est-à-dire la densité de réticulation maximale correspondant au degré de polymérisation maximal du système, peut facilement être calculée à partir d'équations théoriques utilisant la fonctionnalité et la masse moléculaire des différents réactifs. De telles équations valables pour des systèmes stoechiométriques ou non-stoechiométriques ont été proposées (voir par exemple l'article de Jean Louis Halary et al. dans Polymery 1997, 42, n° 2, pages 86 - 95). Dans un système de polycondensation hautement réactif comme celui des résines époxy-amine utilisé dans la présente invention, on peut supposer que la densité de réticulation réelle n'est que très faiblement inférieure à la densité de réticulation théorique. La Demanderesse a constaté qu'elle obtenait des résultats satisfaisants en ce qui concerne les propriétés mécaniques et acoustiques des bois traités lorsque la densité de réticulation réelle était au moins égale à 0,1 mole/kg, de préférence comprise entre 0,5 et 5 moles/kg.

On peut citer à titre d'exemples de premiers réactifs comportant au moins deux fonctions glycidyle l'éther diglycidylique de 1,4-butanediol, l'éther diglycidylique de 1,6-hexanediol, l'éther diglycidylique de résorcinol, l'éther diglycidylique de néopentylglycol, l'éther polyglycidylique de triméthylolpropane, l'ester diglycidylique d'acide hexahydroxyphtalique, l'éther diglycidylique de bisphénol A, les éthers diglycidyliques des polyalkylèneglycols tels que l'éther diglycidylique de diéthylèneglycol, de triéthylèneglcyol, de polyéthylèneglycol ou de polypropylèneglycol, l'éther polyglycidylique de glycérol, de diglycérol ou de polyglycérol, l'éther polyglycidylique de sorbitol.

Parmi ceux-ci, on préfère utiliser en particulier l'éther diglycidylique de bisphénol A et l'éther diglycidylique de 1,4-butanediol.

Les composés comportant au moins deux fonctions -NH d'amine primaire ou secondaire, capables de réagir avec les fonctions glycidyle du premier réactif, sont par exemple l'éthylènediamine, la diéthylènetriamine, la tétraéthylènepentamine, l'aminoéthylpipérazine, la benzyldiméthylamine, la pipéridine, la 2-méthylpentaméthylènediamine, le diaminodiphénylméthane, la diaminodiphénylsulfone, la 1,3-pentanediamine, l'hexaméthylènediamine, la bis(hexaméthylène)-triamine, le 1,2-diaminocyclohexane, la 4-benzylaniline, le N,N'-diméthyldiaminodiphénylméthane, l'hexylamine et la N,N'-diméthylhexaméthylènediamine. Parmi ces amines, on utilise de préférence le diaminodiphénylméthane, la diaminodiphénylsulfone, l'hexaméthylènediamine, l'hexylamine et la N,N'-diméthylhexaméthylènediamine.

Les premier et deuxième réactifs sont utilisés de préférence en des concentrations molaires telles que le rapport stoechiométrique du nombre de fonctions glycidyle au nombre de fonctions amine et/ou phénol ne s'écarte pas trop de 1 et est de préférence compris entre 0,5 et 2. En dehors de cet intervalle, le degré de polymérisation reste insuffisant pour la formation d'un réseau tridimensionnel réticulé. Par contre, à l'intérieur de cet intervalle, la Demanderesse a constaté qu'il était possible de faire varier à souhait la température de transition vitreuse du système polymère obtenu en jouant sur le rapport stoechiométrique des réactifs en présence. Ainsi, pour une combinaison de réactifs donnée, la température de transition vitreuse est généralement maximale pour un rapport stoechiométrique égal à 1 et diminue lorsque le rapport stoechiométrique s'écarte de cette valeur (voir également l'article précité)

La solution d'imprégnation utilisée dans l'étape (a) du procédé de traitement du bois par polycondensation doit avoir une teneur suffisante en réactifs polymérisables pour permettre la formation d'un réseau polymère tridimensionnel à l'intérieur des pores du bois traité, sans toutefois avoir une viscosité excessive qui pourrait gêner la pénétration de la solution dans le volume poreux du bois à traiter. La Demanderesse a constaté que l'on obtenait généralement des résultats satisfaisants en utilisant des solutions d'imprégnation ayant une teneur totale en monomères (B) polymérisables comprise entre 10 et 60 % en poids, de préférence entre 10 et 30 % en poids.

Le procédé décrit ci-dessus permet de renforcer du bois à porosité ouverte par une résine polymère réticulée et de modifier ainsi les propriétés mécaniques et acoustiques de ce bois. Un choix approprié des réactifs, de la densité de réticulation et de la stoechiométrie du système réactif permet d'ajuster assez librement la valeur de la température de transition vitreuse (Tg) de la résine polymérisée à l'intérieur d'une large gamme, comprise par exemple entre -40 °C et 250°C. La température de transition vitreuse peut être déterminée par exemple par analyse calorimétrique différentielle (DSC) ou par analyse mécanique dynamique (DMA). La température de transition vitreuse de la résine sera ajustée en fonction des propriétés mécaniques que l'on souhaite conférer au matériau composite final. Ainsi, dans le domaine des instruments de musique, il est souvent intéressant d'augmenter la capacité de résonance des bois et l'on ajustera alors de préférence la température de transition vitreuse à une valeur supérieure d'au moins dix degrés à la température d'utilisation de l'instrument, par exemple à une valeur au moins égale à 40 °C. Au contraire, lorsqu'on souhaite obtenir des bois traités relativement « mous » du point de vue acoustique, autrement dit des bois à faible résonance, capables d'absorber des sons, la température de transition vitreuse de la résine sera de préférence ajustée à une valeur nettement inférieure à la température ambiante, par exemple à une valeur inférieure à 0 °C.

L'influence de la valeur de la température de transition vitreuse sur les propriétés mécaniques des résines, telles que la dureté, la résistance aux choc, la rigidité ou l'élasticité, est connue et l'on pourra ainsi moduler de manière analogue, grâce à un certain nombre d'essais de polymérisation simples, les propriétés mécaniques des composites bois/résine époxy.

Dans une variante du procédé de traitement du bois par polycondensation de résines époxy-amine, la solution d'imprégnation utilisée dans l'étape (a) contient, en plus des réactifs polymérisables *in situ,* une ou plusieurs charges minérales ou pigments. Les particules de ces additifs, pour pouvoir pénétrer aisément avec la solution d'imprégnation à l'intérieur de la structure poreuse, doivent avoir une granulométrie très fine. La Demanderesse a constaté que la répartition des particules de charge ou de pigments dans le bois traité était généralement satisfaisante lorsque celles-ci avaient une taille moyenne inférieure ou égale à 200 nm, de préférence comprise entre 10 nm et 150 nm.

On peut citer à titre d'exemples de telles charges ou pigments la nanosilice, le dioxyde de titane ou l'argile.

La solution d'imprégnation peut, bien entendu, contenir d'autres additifs couramment utilisés dans le traitement du bois tels que des agents fongicides ou insecticides ou encore des colorants solubles.

Les monomères (B) mis en jeu dans la réaction de polycondensation *in situ* se caractérisent généralement par une réactivité importante. C'est pourquoi il est souvent nécessaire de mettre en oeuvre l'étape d'imprégnation (a) à une température inférieure à la température ambiante de manière à prévenir la polymérisation précoce indésirable des réactifs. Une telle polymérisation précoce se traduirait en effet par le bouchage des pores au niveau des couches superficielles du bois et empêcherait ainsi une pénétration satisfaisante de la solution vers les couches plus profondes. L'imprégnation de la pièce en bois par la solution organique dans l'étape (a) se fait par conséquent de préférence à une température inférieure à 20 °C, en particulier inférieure à 10 °C, et idéalement à une température proche de 5 °C.

La durée de l'étape d'imprégnation dépend d'un certain nombre de facteurs tels que la viscosité de la solution d'imprégnation, la température d'imprégnation, la taille des pores et des orifices de communication entre les pores ou encore la profondeur de pénétration souhaitée. Les essais réalisés par la Demanderesse ont montré que la durée de l'étape d'imprégnation (a) est de préférence au moins égale à 5 jours, de préférence comprise entre 10 et 30 jours. Ces durées relativement longues sont nécessaires en raison de la viscosité importante de la solution à faible température. On peut bien entendu accélérer la pénétration de la solution d'imprégnation dans le bois en réalisant cette étape sous pression, par exemple sous une pression de 0,4 à 1 MPa (4 à 10 bars).

Un deuxième mode de réalisation du procédé selon l'invention utilise non pas la polycondensation de réactifs glycidyliques et aminés, mais la polymérisation/oxydation d'huiles siccatives. La polymérisation d'huiles comportant une proportion importante de chaînes d'acides gras polyinsaturés, tels que l'acide linolénique (3 doubles liaisons) et l'acide linoléique (2 doubles liaisons), est connue et mise à profit depuis longtemps entre autres dans le domaine de la peinture où l'on appelle « siccativité » la capacité d'une peinture à sécher (polymériser) rapidement. La polymérisation des huiles siccatives est une réaction d'ouverture des doubles liaisons en présence d'oxygène et formation de liaisons entre différentes chaînes grasses. Il est également connu d'accélérer le séchage (la réaction de polymérisation) par chauffage et/ou addition d'agents siccatifs, généralement des oxydes métalliques en poudre.

Ce deuxième mode de réalisation du procédé selon l'invention comprend par conséquent
(a) l'immersion d'une pièce en bois dans une huile siccative ou un mélange d'huiles siccatives pendant une durée suffisante pour permettre le remplissage par l'huile d'au moins 60 % du volume poreux accessible du bois, et à une température suffisamment basse pour empêcher la polymérisation prématurée de l'huile pendant cette étape d'imprégnation (a),
(b) le retrait de la pièce imprégnée par l'huile siccative et l'égouttage et/ou l'essuyage de la pièce en bois,
(c) l'exposition du bois ainsi imprégné à un rayonnement électromagnétique d'une longueur d'onde (λ) comprise entre 1 et 10⁻³ mètres pendant une durée totale comprise entre 5 secondes et 40 secondes et avec une puissance comprise entre 300 et 1000 Watts.

Bien que la polymérisation sous rayonnement électromagnétique d'huiles siccatives puisse en principe être appliquée à n'importe quel bois, c'est-à-dire aussi bien à des bois à porosité « ouverte » qu'à des bois à porosité « fermée », elle s'avère particulièrement intéressante pour le traitement de bois à porosité fermée qui ont un faible volume poreux accessible. En effet, la polymérisation d'huiles siccatives seules n'aboutit généralement pas à un réseau polymère suffisant pour conférer à un bois à porosité ouverte des propriétés mécaniques comparables à celles d'un bois dense tel que l'ébène. Le deuxième mode de réalisation n'est par conséquent pas tant un procédé de fabrication de matériaux composites bois/résines destinés à *remplacer* les bois précieux tels que l'ébène, qu'un procédé destiné à *améliorer* les propriétés mécaniques, et en particulier les propriétés acoustiques, de tels bois.

La Demanderesse eût en effet la surprise de constater, qu'une clarinette munie d'un baril en ébène traité selon ce deuxième mode de réalisation du procédé présentait un gain en harmoniques aigues amélioré permettant d'accroître considérablement la capacité de projection (= transmission sonore à longue distance) de l'instrument. Ce baril était identifiable « en aveugle *»* (*blind test)* parmi un grand nombre de barils ayant subi des traitements connus.

Un autre avantage des bois ainsi traités réside dans leur moindre susceptibilité à la fissuration dans le cadre de la fabrication (usinage) et/ou de l'utilisation. Les bois sont en outre moins sensibles aux changements des conditions environnementales (hygrométrie, température).

Les essences de bois utilisés de préférence pour ce deuxième mode de réalisation sont par conséquent choisies parmi les ébènes et les palissandres, bois couramment utilisés pour la fabrication d'instruments de musique, en particulier d'instruments de musique à vent.

Les huiles siccatives sont considérablement moins réactives que les réactifs glycidyliques et aminés (monomères (B)) et l'on ne court généralement pas le risque de polymériser les huiles siccatives pendant l'etape d'imprégnation. Il n'est donc pas nécessaire de mettre en oeuvre cette étape à basse température et l'on préfère imprégner le bois à traiter à une température comprise entre la température ambiante et 80 °C et à une pression supérieure à la pression atmosphérique. Dans ces conditions de température et de pression, la durée de l'étape d'imprégnation est de préférence comprise entre 6 et 48 heures, en particulier entre 6 et 24 heures. Le chauffage du liquide d'imprégnation est particulièrement utile dans ce mode de réalisation appliqué aux bois à porosité fermée car il réduit la viscosité de l'huile et de ce fait le temps nécessaire pour remplir au moins 60 % du volume poreux accessible.

Les huiles siccatives utilisables dans le procédé de la présente invention sont connues et englobent généralement l'huile de lin, l'huile de ricin, l'huile d'aleurites, l'huile d'oïticica, l'huile d'isano, l'huile de lin isomérisée et l'huile de ricin déshydratée. L'huile d'aleurites, l'huile d'oïticica et l'huile d'isano sont des huiles siccatives comprenant naturellement une importante fraction de chaînes d'acides gras à doubles liaisons conjuguées, particulièrement réactives. L'huile de lin isomérisée et l'huile de ricin déshydratée sont des huiles ayant subi un traitement en vue de l'augmentation du taux de chaînes grasses à doubles liaisons conjuguées. L'huile siccative peut être utilisée en combinaison avec une faible fraction d'huiles dites « semi-siccatives ». Ces huiles, également connues dans la technique, ont des taux d'insaturation inférieurs aux huiles siccatives mais sont toutefois capable de former par polymérisation des films continus, plus ou moins durs. Les huiles semi-siccatives englobent_par exemple l'huile de cameline, l'huile de carthame, l'huile de chanvre, l'huile de citrouille, l'huile de melon, l'huile de niger, l'huile de noix, l'huile d'oeuillette, l'huile de périlla, l'huile de pépins de raisins, l'huile de sésame, l'huile de soja, l'huile de tabac et l'huile de tournesol. L'huile siccative peut être utilisée en particulier avec 0,1 à 0,5 partie en poids d'une ou plusieurs de ces huiles semi-siccatives.

Les huiles siccatives et semi-siccatives ci-dessus contiennent naturellement une faible proportion d'acides gras libres résultant de l'hydrolyse partielle des glycérides. Il peut être intéressant d'ajouter une quantité supplémentaire d'acides gras libres. Ces acides gras, parfaitement compatibles avec les huiles, présentent l'avantage d'augmenter le caractère hydrophile des huiles et pourraient ainsi faciliter le mouillage du bois et faciliter la pénétration des huiles à l'intérieur de celui-ci.

On utilisera de préférence l'huile siccative en mélange avec 0,05 à 0,2 partie en poids d'un mélange d'acides gras d'huile de lin ou d'huile de ricin.

Il peut en outre être utile de diluer l'huile siccative, éventuellement en mélange avec une ou plusieurs huiles semi-siccatives et/ou avec des acides gras insaturés, avec un ou plusieurs solvants organiques volatils miscibles avec la phase huileuse afin de réduire la viscosité du liquide d'imprégnation. Ces solvants englobent ceux cités précédemment pour le premier mode de réalisation préféré de l'invention, mais en l'absence de réactifs glycidyliques/aminés il n'est bien entendu pas nécessaire de les choisir parmi les solvants aprotiques.

On pourrait également envisager d'ajouter aux huiles siccatives un ou plusieurs agents activateurs de la réaction de polymérisation. Ces agents activateurs peuvent être des agents oxydants ou encore des générateurs de radicaux libres.

Dans la présente invention, le procédé de traitement du bois par polymérisation *in situ* est appliqué à la fabrication de parties d'instruments à vent, notamment de clarinettes, tels que des becs, barils, corps et pavillons. La pièce en bois est alors avantageusement une ébauche ayant la forme d'un cylindre creux, appropriée pour la fabrication d'instruments à vent.

Enfin, la Demanderesse a constaté que l'application du procédé de la présente invention à des bois non séchés ou partiellement séchés permet de réduire ou d'empêcher l'apparition de fentes au cours du vieillissement ultérieur du bois. Il devient ainsi possible de réduire voire de supprimer sans inconvénients le temps de séchage dans le processus artisanal ou industriel de transformation du bois. La présente invention a par conséquent également pour objet l'utilisation du procédé de traitement du bois décrit ci-dessus pour réduire voire supprimer l'étape de séchage naturel et/ou artificiel du bois avant usinage.

## Revendications

1. Procédé de fabrication d'instruments à vent en bois, comprenant le traitement du bois par polymérisation *in situ*, ledit traitement du bois comprenant :
• une première étape d'imprégnation d'une pièce en bois avec des monomères organiques choisis parmi
(A) les huiles siccatives et/ou
(B) au moins un premier réactif comportant au moins deux fonctions glycidyle et au moins un deuxième réactif comportant au moins deux fonctions -NH d'amine primaire ou d'amine secondaire, la fonctionnalité moyenne de l'ensemble des premier et deuxième réactifs étant strictement supérieure à 2,
• une deuxième étape d'exposition du bois ainsi imprégné à un rayonnement électromagnétique d'une longueur d'onde (λ) comprise entre 1 et 10⁻³ mètres pendant une durée totale comprise entre 5 secondes et 40 secondes et avec une puissance comprise entre 300 et 1000 Watts.

2. Procédé selon la revendication 1, **caractérisé par le fait que** les instruments à vent en bois sont des clarinettes.

3. Procédé selon la revendication 1 ou 2, **caractérisé par le fait que** l'étape d'imprégnation du bois avec des monomères organiques se fait sous une pression de 0,4 à 1 MPa.

4. Procédé selon l'une des revendications précédentes, **caractérisé par le fait que** le rayonnement électromagnétique a une longueur d'onde comprise entre 10⁻¹ et 10⁻² mètres.

5. Procédé selon l'une des revendications précédentes, **caractérisé par le fait que** la durée d'exposition au rayonnement électromagnétique est comprise entre 15 et 30 secondes.

6. Procédé selon la revendication 5, **caractérisé par le fait que** l'exposition au rayonnement électromagnétique se fait en plusieurs périodes de plus faible durée, séparées par des périodes de refroidissement du bois.

7. Procédé selon l'une des revendications précédentes, **caractérisé par le fait que** l'exposition au rayonnement électromagnétique se fait dans un four à micro-ondes ayant une puissance restituée au moins égale à 300 Watts, de préférence comprise entre 400 et 1000 Watts.

8. Procédé selon l'une des revendications précédentes, **caractérisé par le fait que** la pièce en bois est une ébauche ayant la forme d'un cylindre creux, appropriée pour la fabrication d'instruments à vent.

9. Procédé de fabrication d'instruments à vent en bois selon l'une des revendications précédentes, **caractérisé par le fait qu'**il comprend :
(a) l'immersion d'une pièce en bois à porosité ouverte dans une solution contenant, dans un solvant organique volatil, au moins un premier réactif comportant au moins deux fonctions glycidyle et au moins un deuxième réactif comportant au moins deux fonctions -NH d'amine primaire ou d'amine secondaire, la fonctionnalité moyenne de l'ensemble des premier et deuxième réactifs étant strictement supérieure à 2, pendant une durée suffisante pour permettre le remplissage par la solution d'au moins 60 % du volume poreux accessible du bois, et à une température suffisamment basse pour empêcher la polymérisation prématurée des monomères pendant cette étape d'imprégnation (a),
(b) le retrait de la pièce imprégnée par la solution organique et l'égouttage et/ ou l'essuyage de la pièce en bois,
(c) l'exposition du bois ainsi imprégné à un rayonnement électromagnétique d'une longueur d'onde (λ) comprise entre 1 et 10⁻³ mètres pendant une durée totale comprise entre 5 secondes et 40 secondes et avec une puissance comprise entre 300 et 1000 Watts, et éventuellement,
(d) le séchage de la pièce, de préférence sous pression réduite, pendant une durée suffisante pour permettre l'évaporation du solvant organique.

10. Procédé selon la revendication 9, **caractérisé par le fait que** le bois à porosité ouverte utilisé est le wengué *(Milletia laurentii),* le tilleul, l'épicéa, le monpani ou le peuplier, de préférence le wengué.

11. Procédé selon la revendication 9 ou 10, **caractérisé par le fait que** le premier réactif comportant au moins deux fonctions glycidyle est choisi parmi l'éther diglycidylique de 1,4-butanediol, l'éther diglycidylique de 1,6-hexanediol, l'éther diglycidylique de néopentylglycol, l'éther polyglycidylique de triméthylolpropane, l'ester diglycidylique d'acide hexahydroxyphtalique, l'éther diglycidylique de bisphénol A, les éthers diglycidyliques des polyalkylèneglycols tels que l'éther diglycidylique de diéthylèneglycol, de triéthylèneglycol, de polyéthylèneglycol ou de polypropylèneglycol, l'éther polyglycidylique de glycérol, de diglycérol ou de polyglycérol, l'éther polyglycidylique de sorbitol.

12. Procédé selon l'une des revendications 9 à 11, **caractérisé par le fait que** le deuxième réactif comportant au moins deux fonctions amine est choisi parmi l'éthylènediamine, la diéthylènetriamine, la tétraéthylènepentamine, l'aminoéthylpipérazine, la benzyldiméthylamine, la pipéridine, la 2-méthylpentaméthylènediamine, le diaminodiphénylméthane, la diaminodiphénylsulfone, la 1,3-pentanediamine, l'hexaméthylènediamine, la bis(hexaméthylène)-triamine, le 1,2-diaminocyclohexane, la 4-benzylaniline, le N,N'-diméthyldiaminodiphénylméthane, l'hexylamine et la N,N'-diméthylhexaméthylènediamine.

13. Procédé selon l'une des revendications 9 à 12, **caractérisé par le fait que** le solvant organique volatil utilisé dans l'étape (a) a un point de fusion inférieur à -30 °C et un point d'ébullition inférieur à 250 °C, de préférence inférieur à 150 °C.

14. Procédé selon la revendication 13, **caractérisé par le fait que** le solvant organique volatil est choisi parmi les composés hydrocarbonés ayant un squelette en C₁₋₆ et comportant au moins un groupe polaire choisi(s) parmi les fonctions alcool secondaire, éther et ester, et les huiles végétales.

15. Procédé selon la revendication 14, **caractérisé par le fait que** le solvant organique volatil est le 1-méthoxy-2-propanol.

16. Procédé selon l'une des revendications 9 à 15, **caractérisé par le fait que** l'imprégnation de la pièce en bois par la solution organique dans l'étape (a) se fait à une température inférieure à 20°C, de préférence inférieure à 10 °C, et en particulier à une température proche de 5 °C, et pendant une durée au moins égale à 5 jours, de préférence comprise entre 10 et 30 jours.

17. Procédé de fabrication d'instruments à vent en bois selon l'une des revendications 1 à 8, **caractérisé par le fait qu'**il comprend
(a) l'immersion d'une pièce en bois dans une huile siccative ou un mélange d'huiles siccatives pendant une durée suffisante pour permettre le remplissage par l'huile d'au moins 60 % du volume poreux accessible du bois, et à une température suffisamment basse pour empêcher la polymérisation prématurée de l'huile pendant cette étape d'imprégnation (a),
(b) le retrait de la pièce imprégnée par l'huile siccative et l'égouttage et/ ou l'essuyage de la pièce en bois,
(c) l'exposition du bois ainsi imprégné à un rayonnement électromagnétique d'une longueur d'onde (λ) comprise entre 1 et 10⁻³ mètres pendant une durée totale comprise entre 5 secondes et 40 secondes et avec une puissance comprise entre 300 et 1000 Watts.

18. Procédé selon la revendication 17, **caractérisé par le fait que** l'étape d'imprégnation (a) est mise en oeuvre à une température comprise entre la température ambiante et 80 °C et pendant une durée comprise entre 6 et 48 heures, de préférence entre 6 et 24 heures.

19. Procédé selon la revendication 17 ou 18, **caractérisé par le fait que** le bois est choisi parmi les ébènes et les palissandres.

20. Procédé selon l'une des revendications 17 à 19, **caractérisé par le fait que** l'huile siccative est choisie parmi l'huile de lin, l'huile de lin isomérisée, l'huile de ricin, l'huile de ricin déshydratée, l'huile d'aleurites, l'huile d'oïticica et l'huile d'isano.

21. Procédé selon l'une des revendications 17 à 20, **caractérisé par le fait que** l'huile siccative est utilisée en mélange avec une ou plusieurs huiles semi-siccatives, de préférence avec 0,1 à 0,5 partie en poids d'une ou plusieurs huiles semi-siccatives choisies parmi l'huile de cameline, l'huile de carthame, l'huile de chanvre, l'huile de citrouille, l'huile de melon, l'huile de niger, l'huile de noix, l'huile d'oeuillette, l'huile de périlla, l'huile de pépins de raisins, l'huile de sésame, l'huile de soja, l'huile de tabac et l'huile de tournesol.

22. Procédé selon l'une des revendications 17 à 21, **caractérisé par le fait que** l'huile siccative est utilisée en mélange avec des acides gras insaturés, de préférence avec 0,05 à 0,2 partie en poids d'un mélange d'acides gras d'huile de lin ou d'huile de ricin.

23. Procédé selon l'une des revendications 17 à 22, **caractérisé par le fait que** l'huile siccative, éventuellement en mélange avec une ou plusieurs huiles semi-siccatives et/ou avec des acides gras insaturés, est diluée en outre avec un ou plusieurs solvants organiques volatils miscibles avec la phase huileuse.

24. Procédé selon l'une des revendications 17 à 23, **caractérisé par le fait que** l'on ajoute à l'huile siccative un ou plusieurs activateurs de la réaction de polymérisation.

25. Utilisation du procédé selon l'une quelconque des revendications 1 à 24 pour réduire voire supprimer l'étape de séchage naturel et/ou artificiel du bois avant usinage.

## Claims

1. A process for manufacturing woodwind instruments, comprising treatment of the wood by *in situ* polymerisation, said wood treatment comprising:
• a first step of impregnating a piece of wood with organic monomers selected from among
(A) drying oils and/or
(B) at least one first reactant comprising at least two glycidyl functions and at least one second reactant comprising at least two primary amine or secondary amine -NH functions, the mean functionality of the combination of the first and second reactants being strictly greater than 2,
• a second step of exposing the wood thus impregnated to electromagnetic radiation of a wavelength (λ) of between 1 and 10⁻³ metres for a total duration of between 5 seconds and 40 seconds and with a power of between 300 and 1000 W.

2. A process according to claim 1, **characterised in that** the woodwind instruments are clarinets.

3. A process according to claim 1 or claim 2, **characterised in that** the step of impregnating the wood with organic monomers proceeds under a pressure of 0.4 to 1 MPa.

4. A process according to any one of the preceding claims, **characterised in that** the electromagnetic radiation has a wavelength of between 10⁻¹ and 10⁻² metres.

5. A process according to any one of the preceding claims, **characterised in that** the duration of exposure to electromagnetic radiation is between 15 and 30 seconds.

6. A process according to claim 5, **characterised in that** the exposure to electromagnetic radiation proceeds in two or more periods of shorter duration, separated by periods for cooling the wood.

7. A process according to any one of the preceding claims, **characterised in that** the exposure to electromagnetic radiation proceeds in a microwave oven having a power output of at least 300 W, preferably of between 400 and 1000 W.

8. A process according to any one of the preceding claims, **characterised in that** the piece of wood is a blank having the hollow cylindrical shape appropriate for the manufacture of wind instruments.

9. A process for manufacturing woodwind instruments according to any one of the preceding claims, **characterised in that** it comprises:
(a) immersing a piece of wood with open porosity in a solution containing, in a volatile organic solvent, at least one first reactant comprising at least two glycidyl functions and at least one second reactant comprising at least two primary amine or secondary amine -NH functions, the mean functionality of the combination of these first and second reactants being strictly greater than 2, for a duration sufficient to allow the solution to fill at least 60% of the accessible pore volume of the wood and at a temperature which is sufficiently low to prevent premature polymerisation of the monomers during this impregnation step (a),
(b) removing the piece impregnated by the organic solution and draining and/or wiping the piece of wood,
(c) exposing the wood thus impregnated to electromagnetic radiation of a wavelength (λ) of between 1 and 10⁻³ metres for a total duration of between 5 seconds and 40 seconds and with a power of between 300 and 1000 W, and optionally,
(d) drying the piece, preferably at reduced pressure, for a duration sufficient to permit evaporation of the organic solvent.

10. A process according to claim 9, **characterised in that** the wood with open porosity which is used is wenge *(Milletia laurentii),* lime, spruce, mopani or poplar, preferably wenge.

11. A process according to claim 9 or claim 10, **characterised in that** the first reactant comprising at least two glycidyl functions is selected from among 1,4-butanediol diglycidyl ether, 1,6-hexanediol diglycidyl ether, neopentyl glycol diglycidyl ether, trimethylolpropane polyglycidyl ether, hexahydrophthalic acid diglycidyl ester, bisphenol A diglycidyl ether, polyalkylene glycol diglycidyl ethers such as diethylene glycol diglycidyl ether, triethylene glycol diglycidyl ether, polyethylene glycol diglycidyl ether or polypropylene glycol diglycidyl ether, glycerol polyglycidyl ether, diglycerol polyglycidyl ether or polyglycerol polyglycidyl ether, sorbitol polyglycidyl ether.

12. A process according to any one of claims 9 to 11, **characterised in that** second reactant comprising at least two amine functions is selected from among ethylenediamine, diethylenetriamine, tetraethylenepentamine, aminoethylpiperazine, benzyldimethylamine, piperidine, 2-methylpentamethylenediamine, diaminodiphenylmethane, diaminodiphenyl sulfone, 1,3-pentanediamine, hexamethylenediamine, bis(hexamethylene)triamine, 1,2-diaminocyclohexane, 4-benzylaniline, N,N'-dimethyldiaminodiphenylmethane, hexylamine and N,N'-dimethylhexamethylenediamine.

13. A process according to any one of claims 9 to 12, **characterised in that** the volatile organic solvent used in step (a) has a melting point of below -30°C and a boiling point of below 250°C, preferably of below 150°C.

14. A process according to claim 13, **characterised in that** the volatile organic solvent is selected from among hydrocarbon compounds having a C₁₋₅ skeleton and comprising at least one polar group selected from among secondary alcohol, ether and ester functions, and vegetable oils.

15. A process according to claim 14, **characterised in that** the volatile organic solvent is 1-methoxy-2-propanol.

16. A process according to any one of claims 9 to 15, **characterised in that** impregnation of the piece of wood by the organic solution in step (a) proceeds at a temperature of below 20°C, preferably of below 10°C, and in particular at a temperature close to 5°C, and for a duration of at least 5 days, preferably of between 10 and 30 days.

17. A process for manufacturing woodwind instruments according to any one of claims 1 to 8, **characterised in that** it comprises
(a) immersing a piece of wood in a drying oil or a mixture of drying oils for a duration sufficient to allow the oil to fill at least 60% of the accessible pore volume of the wood and at a temperature which is sufficiently low to prevent premature polymerisation of the oil during this impregnation step (a),
(b) removing the piece impregnated by the drying oil and draining and/or wiping the piece of wood,
(c) exposing the wood thus impregnated to electromagnetic radiation of a wavelength (λ) of between 1 and 10⁻³ metres for a total duration of between 5 seconds and 40 seconds and with a power of between 300 and 1000 W.

18. A process according to claim 17, **characterised in that** the impregnation step (a) is carried out at a temperature of between ambient temperature and 80°C and for a duration of between 6 and 48 hours, preferably between 6 and 24 hours.

19. A process according to claim 17 or claim 18, **characterised in that** the wood is selected from among ebonies and rosewoods.

20. A process according to any one of claims 17 to 19, **characterised in that** the drying oil is selected from among linseed oil, isomerised linseed oil, castor oil, dehydrated castor oil, tung oil, oiticica oil and isano oil.

21. A process according to any one of claims 17 to 20, **characterised in that** the drying oil is used as a blend with one or more semi-drying oils, preferably with 0.1 to 0.5 parts by weight of one or more semi-drying oils selected from among camelina oil, safflower oil, hemp oil, pumpkinseed oil, melonseed oil, nigerseed oil, walnut oil, poppyseed oil, Perilla seed oil, grapeseed oil, sesame oil, soya oil, tobacco oil and sunflower oil.

22. A process according to any one of claims 17 to 21, **characterised in that** the drying oil is used as a blend with unsaturated fatty acids, preferably with 0.05 to 0.2 parts by weight of a mixture of linseed oil or castor oil fatty acids.

23. A process according to any one of claims 17 to 22, **characterised in that** the drying oil, optionally blended with one or more semi-drying oils and/or with unsaturated fatty acids, is furthermore diluted with one or more volatile organic solvents which are miscible with the oil phase.

24. A process according to any one of claims 17 to 23, **characterised in that** one or more polymerisation reaction activators are added to the drying oil.

25. Use of a process according to any one of claims 1 to 24 for shortening or even eliminating the step of natural and/or artificial seasoning of the wood prior to machining.

## Patentansprüche

1. Verfahren zur Herstellung von Holzblasinstrumenten, das die Behandlung des Holzes durch *in situ*-Polymerisation umfasst, wobei die Holzbehandlung umfasst:
- einen ersten Schritt zur Imprägnierung eines Holzstücks mit organischen Monomeren, die ausgewählt sind aus:
(A) Trockenölen und/oder
(B) mindestens einem ersten Reaktionsmittel, das mindestens zwei Glycidylfunktionen aufweist, und mindestens einem zweiten Reaktionsmittel, das mindestens zwei -NH-Funktionen eines primären Amins oder eines sekundären Amins aufweist, wobei die durchschnittliche Funktionalität der Gesamtheit an ersten und zweiten Reaktionsmitteln streng größer 2 ist,
- einen zweiten Schritt der Exposition des so imprägnierten Holzes gegenüber elektromagnetischer Strahlung einer zwischen 1 und 10⁻³ Metern liegenden Wellenlänge (λ) für eine zwischen 5 Sekunden und 40 Sekunden liegende Gesamtzeitdauer und mit einer zwischen 300 und 1000 Watt liegenden Leistung.

2. Verfahren gemäß dem Anspruch 1, **dadurch gekennzeichnet, dass** die Holzblasinstrumente Klarinetten sind.

3. Verfahren gemäß dem Anspruch 1 oder 2, **dadurch gekennzeichnet, dass** der Schritt zur Imprägnierung des Holzes mit den organischen Monomeren bei einem Druck von 0,4 bis 1 MPa durchgeführt wird.

4. Verfahren gemäß einem der vorangehenden Ansprüche,
**dadurch gekennzeichnet, dass** die elektromagnetische Strahlung eine zwischen 10⁻¹ und 10⁻² Metern liegende Wellenlänge aufweist.

5. Verfahren gemäß einem der vorangehenden Ansprüche,
**dadurch gekennzeichnet, dass** die Expositionsdauer gegenüber der elektromagnetischen Strahlung zwischen 15 und 30 Sekunden umfasst.

6. Verfahren gemäß dem Anspruch 5, **dadurch gekennzeichnet, dass** die Exposition gegenüber der elektromagnetischen Strahlung in mehreren Zeitabschnitten kürzerer Zeitdauer, die getrennt sind durch die Zeitabschnitte zur Abkühlung des Holzes, durchgeführt wird.

7. Verfahren gemäß einem der vorangehenden Ansprüche,
**dadurch gekennzeichnet, dass** die Exposition gegenüber elektromagnetischer Strahlung in einem Mikrowellenofen mit einer Wiedergabeleistung von mindestens gleich 300 Watt, bevorzugt zwischen 400 und 1000 Watt, durchgeführt wird.

8. Verfahren gemäß einem der vorangehenden Ansprüche, **dadurch gekennzeichnet, dass** das Holzstück ein die Form eines hohlen Zylinders aufweisender Rohling ist, der für die Herstellung von Blasinstrumenten geeignet ist.

9. Verfahren zur Herstellung von Holzblasinstrumenten gemäß einem der vorangehenden Ansprüche, **dadurch gekennzeichnet, dass** es umfasst:
(a) das Eintauchen eines Holzstücks offener Porösität in eine Lösung, die mindestens ein erstes Reaktionsmittel, das mindestens zwei Glycidylfunktionen aufweist, und mindestens ein zweites Reaktionsmittel, das mindestens zwei -NH-Funktionen eines primären Amins oder eines sekundären Amins aufweist, in einem flüchtigen organischen Solvens enthält - wobei die durchschnittliche Funktionalität von der Gesamtheit an ersten und zweiten Reaktionsmitteln streng größer 2 ist - für eine Zeitdauer, die ausreichend ist, um das Füllen von mindestens 60% des erreichbaren porösen Volumens des Holzes mit der Lösung zu erlauben, und bei einer Temperatur, die ausreichend niedrig ist, um die verfrühte Polymerisation der Monomere während diesem Schritt zur Imprägnierung (a) zu verhindern.
(b) die Entfernung des imprägnierten Stücks aus der organischen Lösung und das Abtropfen und/oder das Abwischen des Holzstücks,
(c) die Exposition des so imprägnierten Holzstücks gegenüber einer zwischen 1 und 10⁻³ Metern liegenden Wellenlänge (λ) für eine zwischen 5 Sekunden und 40 Sekunden liegenden Gesamtzeitdauer und mit einer zwischen 300 und 1000 Watt liegenden Leistung, und gegebenenfalls
(d) das Trocknen des Stücks, bevorzugt bei reduziertem Druck für eine Zeitdauer, die ausreichend ist, um die Verdampfung des organischen Lösungsmittels zu erlauben.

10. Verfahren gemäß dem Anspruch 9, **dadurch gekennzeichnet, dass** das verwendete Holz offener Porösität Wenge (Milletia laurentii), Linde, Fichte, Monpani oder Pappel, bevorzugt Wenge, ist.

11. Verfahren gemäß dem Anspruch 9 oder 10, **dadurch gekennzeichnet, dass** das mindestens zwei Glycidylfunktionen aufweisende erste Reaktionsmittel aus dem Diglycidylether von 1,4-Butandiol, dem Diglycidylether von 1,6-Hexandiol, dem Diglycidylether von Neopentylglykol, dem Polyglycidylether von Trimethylolpropan, dem Diglycidylester von Hexahydroxyphthalsäure, dem Diglycidylether von Bisphenol A, den Diglycidylethern von Polyalkylenglykolen wie dem Diglycidylether von Diethylenglykol, von Triethylenglykol, von Polyethylenglykol oder von Polypropylenglykol, dem Polyglycidylether von Glycerin, von Diglycerin oder von Polyglycerin und dem Polyglycidylether von Sorbitol ausgewählt sind.

12. Verfahren gemäß einem der Ansprüche 9 bis 11, **dadurch gekennzeichnet, dass** das mindestens zwei Aminfunktionen aufweisende zweite Reaktionsmittel aus Ethylendiamin, Diethylentriamin, Tetraethylenpentamin, Aminoethylpiperazin, Benzyldimethylamin, Piperidin, 2-Methylpentamethylendiamin, Diaminodiphenylmethan, Diaminodiphenylsulfon, 1,3-Pentandiamin, Hexamethylendiamin, Bis(hexamethylen)-triamin, 1,2-Diaminocyclohexan, 4-Benzylanilin, N,N'- Dimethyldiaminodiphenylmethan, Hexylamin und N,N'-Dimethylhexamethylendiamin ausgewählt ist.

13. Verfahren gemäß einem der Ansprüche 9 bis 12, **dadurch gekennzeichnet, dass** das verwendete flüchtige organische Lösungsmittel im Schritt (a) einen Schmelzpunkt kleiner als -30°C und einen Siedepunkt kleiner als 250°C, bevorzugt kleiner als 150°C, aufweist.

14. Verfahren gemäß dem Anspruch 13, **dadurch gekennzeichnet, dass** das flüchtige organische Lösungsmittel aus den Kohlenwasserstoffverbindungen ausgewählt ist, die ein C₁₋₆ Gerüst aufweisen und mindestens eine polare Gruppe, die aus den Funktionen sekundärer Alkohole, Ether und Ester und den Pflanzenölen ausgewählt ist, aufweisen.

15. Verfahren gemäß dem Anspruch 14, **dadurch gekennzeichnet, dass** das flüchtige organische Lösungsmittel 1-Methoxy-2-propanol ist.

16. Verfahren gemäß einem der Ansprüche 9 bis 15, **dadurch gekennzeichnet, dass** die Imprägnierung des Holzstücks durch die organische Lösung im Schritt (a) bei einer Temperatur geringer als 20°C, bevorzugt geringer als 10°C, und insbesondere bei einer Temperatur nahe 5°C, und für eine Zeitdauer von mindestens gleich 5 Tagen, bevorzugt zwischen 10 und 30 Tagen liegend, durchgeführt wird.

17. Verfahren zur Herstellung von Holzblasinstrumenten gemäß einem der Ansprüche 1 bis 8, **dadurch gekennzeichnet, dass** es umfasst:
(a) das Eintauchen eines Holzstücks in ein Trockenöl oder eine Mischung aus Trockenölen für eine Zeitdauer, die ausreichend ist, um das Füllen von mindestens 60% des erreichbaren porösen Volumens des Holzes mit Öl zu erlauben, und bei einer Temperatur, die ausreichend niedrig ist, um die verfrühte Polymerisation des Öls während diesem Schritt zur Imprägnierung (a) zu verhindern,
(b) die Entfernung des imprägnierten Stücks aus dem Trockenöl und das Abtropfen und/oder das Abwischen des Holzstücks,
(c) die Exposition des so imprägnierten Holzes gegenüber einer zwischen 1 und 10⁻³ Metern liegenden Wellenlänge (λ) für eine zwischen 5 Sekunden und 40 Sekunden umfassende Gesamtzeitdauer und mit einer zwischen 300 und 1000 Watt liegenden Leistung.

18. Verfahren gemäß dem Anspruch 17, **dadurch gekennzeichnet, dass** der Schritt zur Imprägnierung (a) bei einer zwischen der Raumtemperatur und 80°C liegenden Temperatur und für eine zwischen 6 und 48 Stunden, bevorzugt zwischen 6 und 24 Stunden liegende Zeit, ausgeführt wird.

19. Verfahren gemäß den Ansprüchen 17 oder 18, **dadurch gekennzeichnet, dass** das Holz aus Ebenhölzern und Palisanderhölzern ausgewählt ist.

20. Verfahren gemäß einem der Ansprüche 17 bis 19, **dadurch gekennzeichnet, dass** das Trockenöl aus Leinöl, isomerisiertem Leinöl, Rizinusöl, entwässertem Rizinusöl, Aleuritesöl, Oiticicaöl und Isanoöl ausgewählt ist.

21. Verfahren gemäß einem der Ansprüche 17 bis 20, **dadurch gekennzeichnet, dass** das Trockenöl in Mischung mit einem oder mehreren semi-sikkativen Ölen, bevorzugt mit 0,1 bis 0,5 Gewichtsteilen eines oder mehrerer semi-sikkativer Öle, die aus Dotterblumenöl, Färberdistelöl, Hanföl, Kürbisöl, Melonenöl, Nigeröl, Nussöl, Nelkenöl, Perillaöl, Traubenkernöl, Sesamöl, Sojaöl, Tabaköl und Sonnenblumenöl ausgewählt ist, verwendet wird.

22. Verfahren gemäß einem der Ansprüche 17 bis 21, **dadurch gekennzeichnet, dass** das Trockenöl in Mischung mit den ungesättigten Fettsäuren, bevorzugt mit 0,05 bis 0,2 Gewichtsteilen einer Mischung aus Fettsäuren von Leinenöl oder von Rizinusöl, verwendet wird.

23. Verfahren gemäß einem der Ansprüche 17 bis 22, **dadurch gekennzeichnet, dass** das Trockenöl gegebenenfalls eine Mischung mit einem oder mehreren semi-sikkativen Öl(en) und/oder mit ungesättigten Fettsäuren ist, die zudem mit einem oder mehreren flüchtigen organischen Lösungsmitteln, die mit der Ölphase mischbar sind, verdünnt wird.

24. Verfahren gemäß einem der Ansprüche 17 bis 23, **dadurch gekennzeichnet, dass** man zu dem Trockenöl einen oder mehrere Polymerisationsreaktionsaktivatoren zugibt.

25. Verwendung des Verfahrens gemäß irgendeinem der Ansprüche 1 bis 24 zum Reduzieren oder sogar Weglassen des Schritts zur natürlichen und/oder künstlichen Trocknung des Holzes vor der Verarbeitung.
